# EUROPÄISCHE PATENTANMELDUNG

(11) **EP 0 625 666 A1**
(43) Veröffentlichungstag der Anmeldung: **23.11.1994**
(21) Anmeldenummer: 94107397.5
(22) Anmeldetag: 11.05.1994
(51) Int. Cl.: F16L 17/02, F16L 47/06, F16L 21/03

(54) **Dichtring**

(30) Priorität: 12.05.1993 DE 4315957
(71) Anmelder: WOCO Franz-Josef Wolf & Co., D-63628 Bad Soden-Salmünster (DE)
(72) Erfinder: Wolf, Franz Josef, D-63628 Bad Soden-Salmünster (DE); Lauer, Hansjörg, D-63628 Bad Soden-Salmünster (DE); Uecker, Klaus Jürgen, D-50859 Köln (DE); Ruppel, Hubert, D-36396 Steinau a.d. Strasse (Sarrod) (DE)
(74) Vertreter: Jaeger, Klaus, Dr.

(57) **Zusammenfassung**

Die Dichtheit eines im Schnurprofil V-förmigen Dichtringes für Muffensteckverbindungen gegen Innendruck wird dadurch verbessert, daß an der axial innenliegenden und zumindest im wesentlichen radial stehenden Ringlippe (5) des Dichtlippenringes ein dritter Dichtlippenring (8) angeformt ist, der zumindest im wesentlichen zylindrisch ausgebildet und koaxial zur Muffenachse (9) ausgerichtet ist. Nach dem Einschieben des Spitzendes (13) und Umschlagen des V-förmigen Dichtringes wird zwischen der Radiallippe (7) und der muffeneinwärts weisenden zylindrischen Dichtlippe (8) ein bei steigendem Innendruck durch Spreizung zunehmend selbstdichtende Lippenkonfiguration erreicht. Durch formkomplementäre Ausbildung einer Verankerungsringnut (2) in der Muffe (4) und einer Haltemanschette (1) am Dichtring wird die axiale Fixierung des Dichtringes verbessert.

## Beschreibung

Die Erfindung betrifft einen Dichtring der im Oberbegriff des Patentanspruchs 1 genannten Art.

Ein Dichtring dieser Art ist aus der deutschen Patentschrift DE 27 06 756 C2 bekannt. Dieser seit Jahren in der Praxis eingesetzte Dichtring zeichnet sich durch seine beim Einschieben des Spitzendes spreizenden, V-förmig zueinander stehenden Ringlippen aus, die eine ausgezeichnete und zuverlässige Dichtung auf dem Außenmantel des Spitzendes bewirken. Die Praxis hat jedoch auch zwei Schwächen des bekannten Dichtringes gezeigt. Zum einen ist der bekannte Dichtring nicht immer ausreichend dicht gegenüber dem im Rohrleitungssystem herrschenden Innendruck, zum anderen kann es im Bereich der im Fertigungstoleranzbereich kleinen und kleinsten Dichtspaltbreiten beim Einschieben des Spitzendes in die Muffe nicht immer mit der erforderlichen Sicherheit vermieden werden, daß der Kragen des Spitzendes den Dichtring aus der Ringnut herauszieht und in Richtung zum Muffenspiegel hin vor sich herschiebt.

Ausgehend von diesem Stand der Technik liegt der Erfindung die Aufgabe zugrunde, einen Dichtring zu schaffen, der unter unveränderter Beibehaltung der guten Dichtfunktion auf dem Aussenmantel des Spitzendes gegen Außendruck und eine verbesserte Dichtfunktion gegenüber dem Druck des im Rohrleitungssystem geführten Fluids aufweist und eine zuverlässigere Fixierung der Lage des Dichtringes gegenüber axialen Zugkräften und Schubkräften ermöglicht.

Gelöst wird diese der Erfindung zugrundeliegende Aufgabe durch einen Dichtring, der die im kennzeichnenden Teil des Patentanspruchs 1 genannten Merkmale aufweist.

Mit anderen Worten, wesentliches Merkmal des neuen Dichtringes ist eine am Lippenring angeformte dritte ringförmige Dichtrippe, die sich nicht mehr oder minder stark nach radial auswärts erstreckt, sondern zumindest im wesentlichen nahezu zylindrisch ausgebildet und koaxial zur Muffenachse ausgerichtet ist. Als besonders vorteilhaft hat sich dabei erwiesen, wenn diese dritte ringförmige Dichtlippe einen mittleren Durchmesser hat, der zumindest im wesentlichen im Bereich der kreisförmigen Flächenmittellinie der in der Radialebene liegenden kreisringscheibenförmigen Dichtlippe liegt.

Ausgestaltungen der Erfindung sind Gegenstand der Unteransprüche.

Die Erfindung ist im folgenden anhand eines Ausführungsbeispiels in Verbindung mit den Zeichnungen näher erläutert. Es zeigen:
- Fig. 1: ein Ausführungsbeispiel des Dichtringes gemäß der Erfindung im unverspannten Zustand im Axialschnitt des Schnurprofils;
- Fig. 2: den in der Ringnut einer Muffe vormontierten Zustand des Dichtringes vor der Verformung durch das Spitzende; und
- Fig. 3: den Dichtring nach dem Einschieben des Spitzendes.

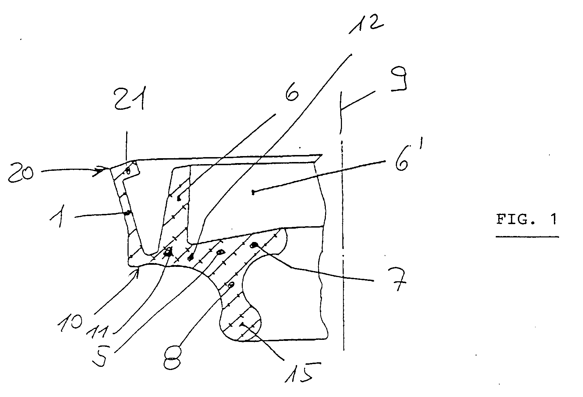

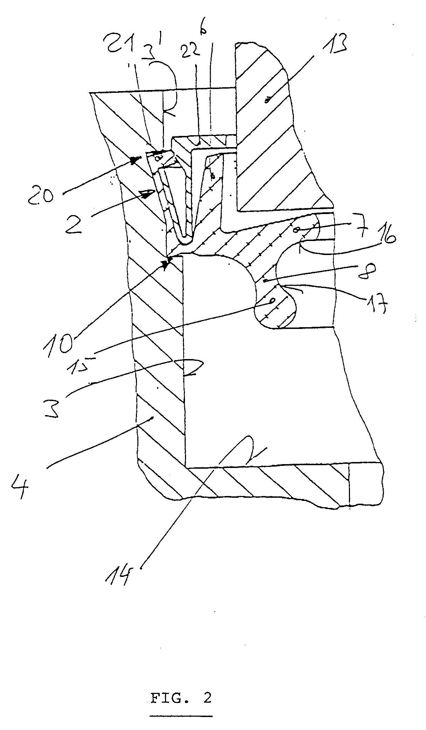

Der in der Fig. 1 gezeigte Dichtring aus gummielastischem Werkstoff besteht aus einer radial außenliegenden Haltemanschette 1 zum Fixieren des Dichtringes durch radial aufweitendes Klemmen in einer Ringnut 2, die in der Innenwand 3 einer Rohrmuffe 4 ausgebildet ist, und aus einem Lippenring 5, der im Schnurprofil und bezogen auf die bestimmungsgemäße Einbaulage (Fig. 2) des Dichtringes in der Rohrmuffe 4 eine erste ringförmige Dichtlippe 6, eine zweite ringförmige Dichtlippe 7 und eine dritte ringförmige Dichtlippe 8 aufweist.

Die erste ringförmige Dichtlippe 6 ist zumindest im wesentlichen zylindrisch ausgebildet und koaxial zur Muffenachse 9 ausgerichtet. Die zweite ringförmige Dichtlippe 7 hat zumindest im wesentlichen die Konfiguration einer in der Radialebene der Muffe 4 liegenden Kreisringscheibe. Das muffenspiegelseitige Ende 10 der Haltemanschette 1, das muffenspiegelseite Ende 11 der ersten Dichtlippe 6 sowie der radial außenliegende Rand 12 der zweiten Dichtlippe 7 gehen in einem gemeinsamen flexiblen Anlenkbereich des Dichtringes ineinander über. Dabei ist der Innendurchmesser der zumindest im wesentlichen zylindrischen ersten ringförmigen Dichtlippe 6 größer als der innerhalb eines Fertigungstoleranzbereiches größte tatsächliche Außendurchmesser des Spitzendes 13. Der Innendurchmesser der kreisringscheibenförmigen zweiten Dichtlippe 7 ist kleiner als der innerhalb eines Fertigungstoleranzbereiches kleinste mögliche Außendurchmesser des Spitzendes 6. Diese relativen Bemessungen sind der Fig. 2 zu entnehmen, die den Dichtring im vormontierten, im Lippenringbereich jedoch unverformten Zustand zusammen mit dem teilweise eingeschobenem Spitzende 13 zeigt.

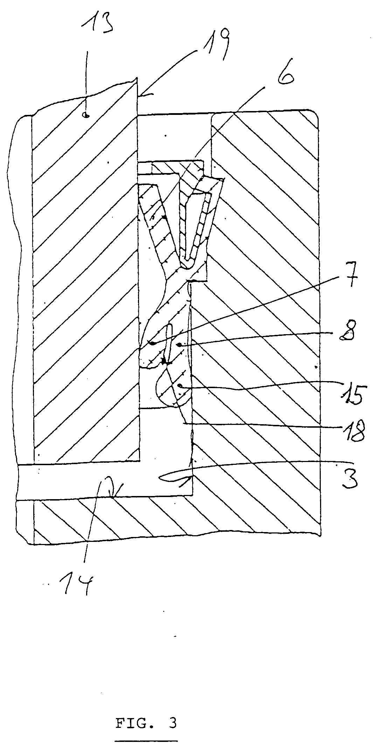

An ihrem zum Muffenspiegel 14 weisenden Rand ist an der ringförmigen Dichtlippe 8 ein Wulstring 15 angeformt, der nach dem Durchschieben des Spitzendes 13 und nach dem dadurch erzwungenem Umschlagen und Spreizen des Lippenringes 6,7,8 in der in Fig. 3 dargestellten Weise dichtend auf die Innenwand 3 der Muffe 4 gezwungen wird. Dabei wird diese radiale Dichtspannung durch die beim Kippen des Lippenringes 6,7,8 erzwungene Streckung des im unverformten Zustand zwischen der radial stehenden zweiten Dichtlippe 7 und der zylindrischen, also im wesentlichen axial ausgerichteten dritten Dichtlippe 8 eingeschlossenen Winkels, aufgebracht. Dabei sind die Dicke der zweiten Dichtlippe 7 in axialer Richtung und die Dicke der dritten Dichtlippe 8 in radialer Richtung sowie die relativen Längen beider Dichtlippen zueinander in der ebenfalls aus Fig. 3 ersichtlichen Weise so gegeneinander abgestimmt und konfiguriert und auf den engsten Dichtspalt zwischen Spitzende 13 und Muffe 4 abgestimmt, daß zwischen der im entspannten Zustand zum Muffenspiegel weisenden Oberfläche 16 der zweiten Dichtlippe 7 und der nach radial innen weisenden Oberfläche 17 der dritten Dichtlippe 8 (Fig. 2) eingeschlossene Ringspalt 18 (Fig. 3) stets zum Muffenspiegel 14 hin offenbleibt, so daß das Lippenpaar 7,8 bei zunehmendem Innendruck im Rohrleitungssystem zwischen dem Außendmantel 19 des Spitzendes 13 und der Innenwand 3 der Muffe 4 selbstdichtend wirkt.

Zur Verbesserung der axialen Fixierung des Dichtringes in der Muffe 4 ist das Außenprofil der Haltemanschette 1 im entspannten Zustand exakt formkomplementär zum Profil der in der Muffeninnenwand ausgebildeten Ringnut 2 ausgebildet. Die Haltemanschette 1 weist an ihrem muffenkragenseitigen Ende 20 eine wulstringartig nach radial einwärts vorspringende ringförmige Verstärkung 21 auf, deren kleinster Durchmesser kleiner als der Innendurchmesser der Innenwand 3' der Muffe 4 in dem muffenkragenseitig an die Ringnut 2 angrenzenden Bereich ist. Dadurch kann die Haltemanschette einerseits puffernd und federnd einen Klemmring 22 abstützen und wird zum anderen auf diese Weise gleichzeitig verstärkt und paßgenau in die Ringnut 2 hineingedrückt.

## Patentansprüche

1. Dichtring aus gummielastischem Werkstoff bestehend aus einer radial außenliegenden Haltemanschette (1) zum Fixieren des Dichtringes durch radial aufweitendes Klemmen in einer Ringnut (2), die in der Innenwand (3) einer Rohrmuffe (4) ausgebildet ist, und einem Lippenring (5), der im Schnurprofil und bezogen auf die bestimmungsgemäße Einbaulage des Dichtringes in einer Rohrmuffe, eine erste ringförmige Dichtlippe (6) aufweist, die zumindest im wesentlichen zylindrisch und koaxial zur Muffenachse (9) ausgebildet und ausgerichtet ist, und einer zweiten ringförmigen Dichtlippe (7), die zumindest im wesentlichen die Konfiguration einer in der Radialebene der Muffe (4) liegenden Kreisringscheibe hat, wobei das muffenspiegelseitige Ende (10;11) der Haltemanschette (1) und der ersten Dichtlippe (6) sowie der radial außenliebende Rand (12) der zweiten Dichtlippe (7) in einem gemeinsamen flexiblen Anlenkbereich (11) des Dichtringes miteinander verbunden sind, und wobei der Innendurchmesser der zylindrischen ersten ringförmigen Dichtlippe größer ist als der innerhalb eines Fertigungstoleranzbereiches größte tatsächliche Außendurchmesser eines Spitzendes (13) der durch den Dichtring zu dichtenden Rohrverbindung, und der Innendurchmesser der kreisringscheibenförmigen zweiten Dichtlippe kleiner als der innerhalb eines Fertigungstoleranzbereiches kleinste mögliche Außendurchmesser des Spitzendes ist,
**gekennzeichnet** durch
eine dritte rineförmige Dichtlippe (8), die sich von der muffenspiegelseitigen Oberfläche der zweiten kreisringscheibenförmigen Dichtlippe (7) aus zumindest im wesentlichen und überwiegend zylindrisch und zur Muffenachse (9) koaxial muffeneinwärts zum Muffenspiegel (14) hin erstreckt.

2. Dichtring nach Anspruch 1,
dadurch **gekennzeichnet**,
daß der muffenspiegelseitige Rand der dritten Dichtlippe als Wulstring (15) ausgebildet ist.

3. Dichtring nach einem der Ansprüche 1 oder 2,
dadurch **gekennzeichnet**,
daß der Wandmitteldurchmesser der dritten ringförmigen Dichtlippe (8) zumindest im wesentlichen im Bereich der kreisförmigen Mittellinie der kreisringscheibenförmigen zweiten Dichtlippe (7) zwischen deren radial innerem und derem radial äußeren Rand ist.

4. Dichtring nach einem der Ansprüche 1 bis 3,
dadurch **gekennzeichnet**,
daß die in axialer Richtung der Muffe gemessene Dicke der zweiten Dichtlippe (7) und die in radialer Richtung gemessene Dicke der dritten Dichtlippe (8) so aufeinander und auf die in einem Fertigungstoleranzbereich kleinste mögliche tatsächliche Dichtspaltbreite abgestimmt sind, daß auch bei dieser kleinsten möglichen Dichtspaltbreite nach dem Einführen des Spitzendes (13) in die Muffe (4) und nach dem bestimmungsgemäßen Umschlagen des Lippenringes nach axial einwärts in die Muffe hinein der zwischen der im vormontierten Zustand muffenspiegelseitig weisenden Oberfläche (16) der zweiten Lippe (7) und der radial einwärts weisenden Oberfläche (17) der dritten Lippe (8) gebildete Ringspalt (18) nach axial einwärts zum Muffenspiegel (14) zu offenbleibt.

5. Dichtring nach einem der Ansprüche 1 bis 4,
dadurch **gekennzeichnet**,
daß nach dem Einführen des Spitzendes (13) im gekippten Zustand des Lippenringes (6,7,8) die dritte Dichtlippe (8) in Richtung auf den Muffenspiegel (14) zu axial länger als die zweite Dichtlippe ist.

6. Dichtring nach den Ansprüchen 2 und 5,
dadurch **gekennzeichnet**,
daß der gesamte Wulstring (15) in Richtung auf den Muffenspiegel zu vor dem muffenspiegelseitigen Rand der zweiten Dichtlippe (7) liegt.

7. Dichtring nach einem der Ansprüche 1 bis 6,
dadurch **gekennzeichnet**,
daß die Haltemanschette (1) an ihrem muffenkragenseitigen Ende (20) einen nach radial einwärts vorspringenden Wulstring (21) angeformt trägt, dessen Innendurchmesser kleiner ist als der Innendurchmesser der an die Ringnut angrenzenden Innenwand (3') der Muffe, in der die Haltemanschette fixiert ist.

8. Dichtring nach einem der Ansprüche 8 bis 7,
dadurch **gekennzeichnet**,
daß die axiale Länge der Haltemanschette (1) gleich oder zumindest geringfügig kürzer wie die axiale Länge der Ringnut (2) ist, in der die Haltemanschette durch den Klemmring (22) fixiert ist.

9. Dichtring nach einem der Ansprüche 1 bis 8,
dadurch **gekennzeichnet**,
daß im unverformten Zustand der Haltemanschette (1) deren Außenkontur exakt komplementär zur Innenkontur der Ringnut (2) ausgebildet ist, in die die Haltemanschette bestimmungsgemäß eingesetzt ist.
